# EUROPÄISCHE PATENTSCHRIFT

(11) **EP 1 508 808 B1**
(45) Veröffentlichungstag und Bekanntmachung des Hinweises auf die Patenterteilung: **21.10.2009**
(21) Anmeldenummer: 04018724.7
(22) Anmeldetag: 04.12.1998
(51) Int. Cl.: G01N 35/10, B01L 3/02

(54) **Verfahren zur elektrisch ausgelösten Mikrotropfenabgabe mit einem Dispenserkopf**
Method for electrically actuated dispensing of microdrops
Procédé de distribution microscopique a commande électrique

(30) Priorität: 05.12.1997 DE 19754000
(43) Veröffentlichungstag der Anmeldung: 23.02.2005
(62) Teilanmeldung aus: 98965761.4
(73) Patentinhaber: Max-Planck-Gesellschaft zur Förderung der Wissenschaften e.V., 80539 München (DE)
(72) Erfinder: Kietzmann, Markus, 82515 Wolfratshausen (DE); Eickhoff, Holger, 14195 Berlin (DE); Kalkum, Markus, 10967 Berlin (DE); Arold, Carsten, 10117 Berlin (DE); Przewieslik, Thomas, 12167 Berlin (DE)
(74) Vertreter: Beier, Ralph

(56) Entgegenhaltungen:
- EP-A- 0 810 438
- WO-A-97/48818
- US-A- 5 658 802
- US-A- 5 681 757
- PATENT ABSTRACTS OF JAPAN Bd. 097, Nr. 001, 31. Januar 1997 (1997-01-31) -& JP 08 233710 A (HITACHI LTD;HITACHI KOKI CO LTD), 13. September 1996 (1996-09-13)
- PATENT ABSTRACTS OF JAPAN Bd. 096, Nr. 012, 26. Dezember 1996 (1996-12-26) -& JP 08 219956 A (HITACHI KOKI CO LTD;HITACHI LTD), 30. August 1996 (1996-08-30)

## Beschreibung

Die Erfindung betrifft ein Verfahren zur Abgabe von Mikrotropfen mit einem Mehrkanal-Dispensierkopf.

Dispensierköpfe oder -module werden verbreitet für biotechnologische oder chemisch-technologische Aufgaben eingesetzt, um kontrolliert kleine Flüssigkeitsvolumina in Form von Mikrotropfen abzugeben. Ein Beispiel hierfür ist die Herstellung von miniaturisierten DNS-Arrays für gentechnische Anwendungen, wobei durch eine geringe Tropfengröße eine hohe Klondichte erzielt wird, wofür piezoelektrisch betätigte Mikropipetten besonders gut geeignet sind. DNS-Klone, Mikroorganismen, Zellen, Zellbestandteile oder Biomoleküle werden üblicherweise als Wirksubstanzen in Mikrotiterplatten mit einer Vielzahl von Vertiefungen (beispielsweise 96 oder 384) gelagert. Damit Arrays aus beispielsweise zehntausenden verschiedener DNS-Sequenzen (sogenannte DNS-Chips) schnell hergestellt werden können, sind Dispensiermodule erforderlich, die hochparallel oder mit einer hinreichenden seriellen Geschwindigkeit Flüssigkeiten aus Mikrotiterplatten für kombinatorische Zwecke auf Substratoberflächen übertragen können.

Es ist allgemein bekannt, daß als Dispensiersysteme Einkanal-Dispensierköpfe oder Mehrkanal-Dispensierköpfe in Form einer linearen Reihenanordnung aus Mikropipetten eingesetzt werden.

Diese herkömmlichen Dispensiersysteme besitzen die folgenden Nachteile.

Die Verwendung eines Einkanal-Dispensierkopfes mit einer einzelnen Mikropipette bedeutet, daß die zu kombinierenden Substanzen seriell von einem Reservoir (z.B. Mikrotiterplatte) zu einem Reaktionssubstrat befördert werden müssen, wobei bei jedem Substanzwechsel ein Reinigungsschritt erforderlich ist. Diese Verfahrensweise ist wegen des Zeitaufwandes für praktische Anwendungen der kombinatorischen Biotechnologie oder Chemie unakzeptabel.

Mehrkanal-Dispensierköpfe, die im wesentlichen aus einer Reihe on beispielsweise 8 bis 16 Einkanal-Dispensierköpfen bestehen, erlauben zwar durch den parallelen Betrieb der einzelnen Mikropipetten eine Verringerung des Zeitaufwandes, erfordern jedoch bisher aufwendige Halterungs- und Steueranordnungen. Da jede einzelne Mikropipette mit zwei Steuerleitungen zur Betätigung des Piezoelements und mit einer Flüssigkeitsleitung zum Anlegen eines Spül- oder Beschickungsdruckes ausgestattet ist, stellen herkömmliche Mehrkanal-Dispensierköpfe komplexe und schwerfällige Anordnungen dar. So wäre beispielsweise bei einem Dispensierkopf mit einer Reihe von 8 elektrisch betätigten Mikropipetten die Anbringung von insgesamt 16 Steuerleitungen und 8 Druckleitungen erforderlich, die mit entsprechenden einzelnen Steuer- und Druckeinrichtungen verbunden sind. Soll ein derartiger Mehrkanal-Dispensierkopf beispielsweise mit einer x-y-z-Stelleinrichtung über einem Substrat verfahren werden, so stellt der komplexe Aufbau des Dispensierkopfes werden des Gewichts und der erforderlichen Mitführung einer Vielzahl von Einzelleitungen einen entscheidenden Nachteil für die Genauigkeit der Dispensierkopfpositionierung dar. Bei ungenauer Mikrotropfenplazierung wird jedoch die Effektivität der herkömmlichen Dispensiersysteme in unakzeptabler Weise eingeschränkt. Ein weiterer Nachteil besteht in der verhältnismäßig hohen Störanfälligkeit der reihenweise angeordneten Einkanal-Mikropipetten. Schließlich benötigt jeder der reihenweise angebrachten Einkanal-Dispensierköpfe so viel Platz, daß die Mikropipetten-Spitzen größere Abstände als die üblichen Rastermaße von Mikrotiterplatten haben. Damit wird eine Substanzaufnahme von Mikrotiterplatten uneffektiv.

Aus der EP 0 810 438 ist ein Verfahren zum Beschicken eines Mehrkanaldispensierkopfes mit Wirksubstanzen bekannt, bei dem die Mikropipetten zuerst aus einem gemeinsamen Reservoir mit einer Trägerflüssigkeit zur Druckübertragung beschickt werden, wobei die Trägerflüssigkeit vom Reservoir über die Zuleitungen der einzelnen Mikropipetten bis zu einem Ladevolumen an der Mikropipettenspitze reicht. Vor dem Füllen des Ladevolumens einer jeden Mikropipette mit einer Wirksubstanz wird eine kleine Menge Luft eingesaugt, so dass sich zwischen Trägerflüssigkeit und Wirksubstanz ein Luftspalt ergibt.

Aus der US 5,681, 757 ist ein Verfahren zum Abgeben eines Bondklebers zum Bonden eines Halbleiters unter Verwendung eines Druckerkopfes bekannt, der ein Mikrojetarray aufweist.

Aus der US 5,658,802 ist ebenfalls ein Verfahren zum Abgeben kleiner Flüssigkeitsmengen bekannt.

Die Aufgabe der Erfindung ist es, ein Verfahren zur Abgabe von Mikrotropfen anzugeben.

Diese Aufgabe wird ein Verfahren mit den Merkmalen gemäß Patentanspruch 1 gelöst. Vorteilhafte Ausführungsformen der Erfindung ergeben sich aus den abhängigen Ansprüchen.

Die Erfindung kann mit allen Formen von Mikropipetten realisiert werden, die mit einer elektrisch betätigbaren Auslöseeinrichtung ausgerüstet und zur Mikrotropfenabgabe nach Auslösung eines Druckpulses im Volumen der Mikropipette eingerichtet sind. Die Auslöseeinrichtung kann eine Piezoeinrichtung, eine Ventilanordnung (in Kombination mit einer Druckleitung) oder jede entsprechende elektrische Druckvorrichtung sein. Die zweidimensionale oder flächige Anordnung von Mikropipetten auf einem gemeinsamen Träger kann jede regelmäßige oder unregelmäßige Anordnung umfassen. Es wird jedoch eine regelmäßige Anordnung mit geraden oder konzentrisch kreisförmigen Reihen bevorzugt. Bei einer rechtwinkligen Matrixanordnung bilden die Mikropipetten rechtwinklig zueinander ausgerichtete Reihen und Spalten. Bei einer schiefwinkligen Matrixanordnung bilden die Mikropipetten gerade Reihen und Spalten, die schräg (nicht senkrecht) zueinander ausgerichtet sind. Bei einer kreisförmigen Anordnung bilden die Mikropipetten konzentrische Kreise. Im letzteren Fall werden die im folgenden genannten Reihen und Spalten durch radial angeordnete (gerade) Mikropipettenreihen und kreisförmige Mikropipettenreihen gebildet.

Gemäß einer ersten Ausführungsform besteht der Dispensierkopf zur Ausführung eines Verfahrens gemäß der Erfindung aus einer oder mehreren Mikropipettenreihen auf einem gemeinsamen Träger, wobei die Massekontakte jeder Reihe elektrisch miteinander verbunden sind und die Signalkontakte mit einer Signal-Demultiplexschaltung einzeln ansteuerbar sind. Gemäß einer zweiten Ausführungsform besteht der Dispensierkopf zur Ausführung eines Verfahrens gemäß der Erfindung aus einer oder mehreren Mikropipettenreihen auf einem gemeinsamen Träger, wobei die Signalkontakte aller Reihen elektrisch miteinander verbunden sind und die Massekontakte mit einer Demultiplexschaltung einzeln ansteuerbar sind. Gemäß einer dritten Ausführungsform besteht der Dispensierkopf zur Ausführung des Verfahrens gemäß der Erfindung aus einer Mehrzahl von Mikropipettenreihen derart, daß die Mikropipetten zweidimensional maxtrixartig spalten- und reihenweise angeordnet sind. Bei dieser Ausführungsform sind die Massekontakte jeder Reihe elektrisch verbunden, wobei eine Masse-Demultiplexschaltung vorgesehen ist, mit der die gemeinsamen Massekontakte der einzelnen Mikropipettenreihen einzeln ansteuerbar sind. Außerdem sind die Signalkontakte jeder Mikropipettenspalte elektrisch miteinander verbunden, wobei in diesem Fall die Signal-Demultiplexschaltung dazu vorgesehen ist, daß die gemeinsamen Signalkontakte der Mikropipettenspalten einzeln ansteuerbar sind.

Durch die Demultiplex-Technik wird ermöglicht, daß durch Anlegen des Masse- bzw. Signalpotentials an eine der Reihen bzw. Spalten genau eine Auslöseeinrichtung einer Mikropipette betätigt wird, deren Position der ausgewählten Reihe bzw. Spalte entspricht.

Zur Ausführung der Erfindung kann auch eine Mikropipette mit einer elektrisch betätigbaren Auslöseeinrichtung verwendet werden, die einen Masse- und einen Signalanschluß besitzt und die zwei Befestigungseinrichtungen aufweist. Jede der Befestigungseinrichtungen erfüllt eine Doppelfunktion. Erstens ist eine Befestigungseinrichtung zur Herstellung einer elektrischen Verbindung zwischen dem Masse- bzw. dem Signalanschluß und entsprechenden elektrischen Steueranschlüssen an einem Träger oder einer Halterung vorgesehen. Zweitens dienen die Befestigungseinrichtungen selbst als mechanische Verbindungsmittel oder als Befestigungsmittel zur Anbringung der Mikropipette an dem Träger bzw. der Halterung. Die Befestigungseinrichtungen stellen einen mechanisch sicheren Eingriff der Mikropipette mit dem Träger oder der Halterung bereit und umfassen z.B. Lötösen, Federelemente oder Gewindeansätze.

Gemäß einer vorteilhaften Gestaltung der Mikropipetten ist jede Mikropipette über eine Druckleitung mit einer ebenfalls am Träger angebrachten Verteilereinrichtung verbunden, über die ein Beschickungs- oder Reinigungsdruck auf die Mikropipetten gegeben werden kann. Die Verteilereinrichtung ist entweder eine Mehrventilanordnung oder ein ventilfreies Verzweigungsstück.

Die Mikropipetten weisen beim Ausführen der Erfindung ein Ladevolumen zur Aufnahme der mikrotropfenweise abzugebenden Wirksubstanz und ein Trägervolumen zur Aufnahme einer Trägerflüssigkeit auf. Gemäß einem bevorzugten Verfahren der Erfindung wird der Dispensierkopf derart beschickt, daß zunächst eine Trägerflüssigkeit simultan in alle Trägervolumen der Mikropipetten aufgenommen wird. Anschließend werden an einer Wirksubstanzreservoiranordnung, die eine Vielzahl von Reservoiren enthält, die jeweils entsprechend der Mikropipettenanordnung am Dispensierkopf ausgerichtet sind, an jeder Mikropipette spezifisch Wirksubstanzen aufgenommen. Die Auslöseeinrichtung ist jeweils im Bereich des Trägervolumens angebracht, so daß die mikrotropfenweise Abgabe durch Betätigung der Auslöseeinrichtungen und Vermittlung des Druckpulses über die Trägerflüssigkeit auf die jeweilige Wirksubstanz erfolgt.

Die Erfindung besitzt die folgenden Vorteile. Der Mehrkanal-Dispensierkopf zum Ausführen einer Ausführungsform der Erfindung besitzt einen wesentlich vereinfachten Aufbau, der je nach konkreter Mikropipettenanordnung durch Einsatz der Demultiplex-Technik auch eine Vereinfachung der Mikropipettenansteuerung erlaubt. Diese betrifft sowohl die Zahl der zum Dispensierkopf führenden Masse- und Signalleitungen, die unabhängig von der Zahl der Mikropipetten bis auf zwei Leitungen reduzierbar sind, als auch den Umfang der zur Ansteuerung der Mikropipetten erforderlichen Steuerelektronik. Außerdem ist der vereinfachte Aufbau leichter manipulierbar und somit genauer positionierbar. Schließlich erlaubt die Anordnung von Mikropipetten auf einem gemeinsamen Träger eine Verringerung des Mikropipettenabstandes, so daß entsprechend Wirksubstanzen von Mikrotiterplatten mit geringem Abstand der einzelnen Mikrotitervolumina aufgenommen werden können. Die Zahl der parallel bearbeiteten Substanzen erhöht sich, so daß eine entsprechende Zeitersparung erzielt wird. Der Mehrkanal- Dispensierkopf gemäß der Erfindung erlaubt erstmalig eine vollautomatische und reproduzierbare Steuerung der Dispensierkopfpositionierung und der Mikrotropfen-Abgabezeiten nach vorgegebenen Programmustern, beispielsweise unter Einsatz eines Steuerrechners.

Weitere Vorteile und Einzelheiten der Erfindung werden aus der folgenden Beschreibung der beigefügten Zeichnungen ersichtlich. Es zeigen:
- Fig. 1:: eine schematische Teil-Schnittansicht eines Mehrkanal-Dispensierkopfs zum Einsatz in einem erfindungsgemäßen Verfahren;
- Fig. 2:: die Kontaktgestaltung für einen MehrkanalDispensierkopf;
- Fig. 3:: eine schematische Übersichtsdarstellungeines weiteren Mehrkanal-Dispensierkopfes zum Einsatz in einem erfindungsgemäßen Verfahren;
- Fig. 4:: eine Übersichtsdarstellung der elektrischen Steuerung des Mehrkanal-Dispensierkopfes gemäß Fig. 3;
- Fig. 5:: eine schematische Perspektivansicht eines Trägers eines Dispensierkopfs zum Einsatz in einem erfindungsgemäßen Verfahren, bei dem eine Mikropipettenmatrix vorgesehen ist;
- Fig. 6:: eine Übersichtsdarstellung der elektrischen Ansteuerung eines Mehrkanal-Dispensierkopfs gemäß Fig. 5;
- Fig. 7:: ein Schaltbild einer Hochspannungs-Versorgungseinrichtung für einen Mehrkanal-Dispensierkopf gemäß den Fign. 3 oder 5;
- Fig. 8:: ein Schaltbild einer Demultiplex-Anordnung gemäß Fig. 5;
- Fig. 9:: ein Schaltbild zum Zusammenwirken der Hochspannungs-Versorgungseinrichtung mit den Demultiplex-Anordnungen gemäß den Fign. 7 und 8;
- Fig. 10:: eine schematische Darstellung einer Mikropipette;
- Fig. 11:: eine schematische Darstellung einer weiteren Mikropipette; und
- Fig. 12:: eine schematische Übersichtsdarstellung zur Erläuterung des Einsatzes eines Mehrkanal-Dispensierkopfes gemäß der Erfindung.

Die Erfindung wird im folgenden unter Bezug auf einen Dispensierkopf mit piezoelektrisch betätigbaren Mikropipetten beschrieben, die zur vertikalen Abgabe von Mikrotropfen im sub-µl-Bereich auf Substrate eingerichtet sind. Die Erfindung ist jedoch nicht auf diese Anwendung beschränkt, sondern allgemein bei allen Mikropartikelplazierungseinrichtungen mit allen Arten von Auslöseeinrichtungen anwendbar, bei denen elektrisch betätigte Dispenser reihen- oder matrixartig angeordnet sind und die einzelnen Auslöseeinrichtungen jedes Dispensers separat betätigbar sein sollen. Die Erfindung ist ferner nicht auf ein bestimmtes, im folgenden beispielhaft angeführtes Format der Mikropipettenanordnung beschränkt, sondern auf beliebige Reihenlängen oder Matrix-Größen, zur vertikalen oder horizontalen Mikrotropfen- oder partikelabgabe anwendbar. Die Erfindung ist mit beliebigen oder kommerziell verfügbaren, elektrisch betätigbaren Mikropipetten implementierbar, so daß im folgenden Einzelheiten der Mikropipetten nicht beschrieben werden.

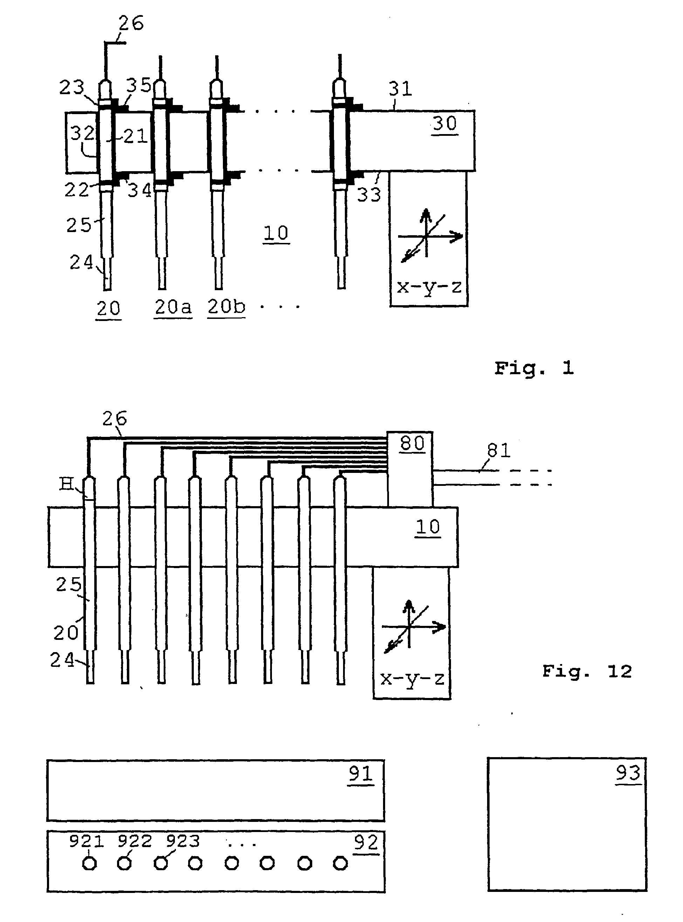

Fig. 1 zeigt schematisch eine Schnittteilansicht eines Dispensierkopfs 10 zum Einsatz in einem erfindungsgemäßen Verfahren mit einer Gruppe von Mikropipetten 20 (20a, 20b, ...), die an einem gemeinsamen Träger 30 angebracht sind, der mit einer x-y-z-Stelleinrichtung verstellbar ist. Jede Mikropipette 20 besitzt als Auslöseeinrichtung ein Piezoelement 21 mit zwei Steueranschlüssen, die einen Masse-Anschluß 22 und einen Signal-Anschluß (oder: Phase-Anschluß) 23 umfassen. An der Pipettenspitze bildet die Mikropipette 20 ein Ladevolumen 24, das gegebenenfalls in ein Trägervolumen 25 (s. unten) übergeht. Am entgegengesetzten Ende der Mikropipette ist eine Druckleitung 26 vorgesehen, deren Einzelheiten unten beschrieben werden.

Der Träger 30 besteht aus mindestens einem plattenförmigen Trägerelement, das mit Aufnahmen 32 (32a, 32b, ...) zur Anbringung der Mikropipetten 20 versehen ist. Außerdem sind am Träger 30 in zwei voneinander beabstandeten, elektrisch isolierten, im wesentlichen ebenen Bereichen, die bei dem dargestellten Beispiel durch die Oberflächen 31, 33 (oder Seitenflächen) des Trägerelements gebildet werden, mit Kontakten 34, 35 versehen, die jeweils einen Massekontakt 34 und einen Signalkonakt 35 umfassen. Die Masse- und Signalkontakte 34, 35 stehen jeweils entsprechend mit den Masse- und Signal-Anschlüssen 22, 23 der Piezoelemente 21 in elektrischer Verbindung. Schließlich können elektronische Bauelemente und Einrichtungen zu deren Befestigung und Verbindung am Träger vorgesehen sein. Hierzu ist der Träger vorzugsweise selbst eine Schaltungsplatine. Es kann insbesondere die komplette Versorgungs- und Demultiplexelektronik auf dem Träger angebracht sein.

An jeder Aufnahme 32 des Trägerelements 31 ist eine Befestigungseinrichtung zur Halterung der Mikropipette 20 vorgesehen. Die Befestigung erfolgt vorzugsweise lösbar, um einzelne Mikropipetten austauschen zu können. Gemäß einer bevorzugten Ausführungsform wird die Befestigungseinrichtung selbst durch die Masse- und Signalkontakte 34, 35 gebildet, falls diese Federelemente sind, unter deren Wirkung die Mikropipetten 20 mit dem Piezoelement 21 in der Aufnahme 32 festgehalten werden.

Die Anordnung der Mikropipetten auf dem gemeinsamen Träger erlaubt es, daß der Abstand zwischen den Mikropipettenspitzen so gering wird (z.B. 4,5 mm oder 9 mm), daß eine unmittelbare Substanzaufnahme aus üblicherweise verwendeten Mikrotiterplatten simultan für alle Mikropipetten eines Dispensierkopfes möglich ist. Die Anbringung der Masse- und Signalkontakte 34, 35 auf zwei getrennten Ebenen erlaubt ferner eine kreuzungsfreie, reihen- oder spaltenweise Verbindung von Kontakten, wie dies im folgenden erläutert wird.

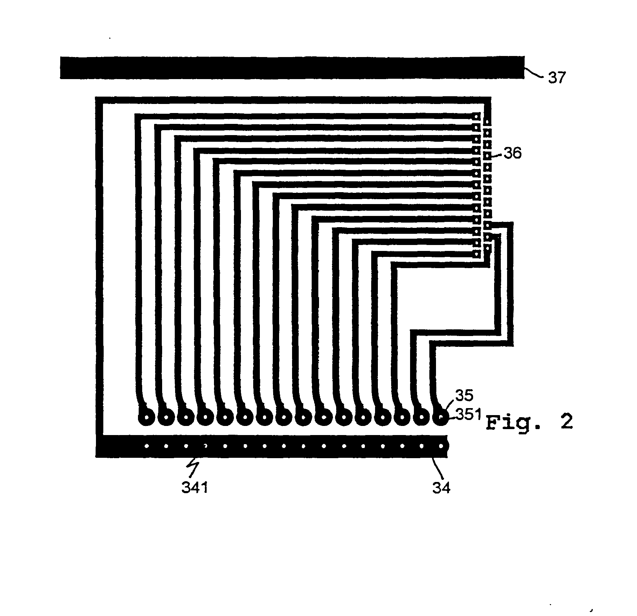

Gemäß einer Ausführungsform werden die Mikropipetten als lineare Reihe seitlich an einem gemeinsamen flachen Träger angebracht. Fig. 2 zeigt ein Beispiel für die Kontaktierung einer (nicht dargestellten) Platine (Platinenlayout), wie sie als ein Träger 30 realisiert sein kann. Fig. 2 zeigt zwei Kontaktreihen 34, 35, die auf der Seitenfläche einer Trägerplatine vorgesehen sind und jeweils eine Vielzahl von Durchgangslöchern 341, 351 aufweisen, die zur Aufnahme von federnden Lötösen eingerichtet sind und die mit entsprechenden Aufnahmeöffnungen auf der Trägerplatine (entsprechend den Aufnahmen 32 in Fig. 1) ausgerichtet sind. Die Mikropipetten verlaufen hier parallel zur Ebene des Trägers. Die Kontakte einer der Kontaktreihen sind miteinander elektrisch verbunden. Beim dargestellten Beispiel sind die Massekontakte 34 miteinander verbunden, während die Signalkontakte 35 voneinander getrennt und einzeln ansteuerbar sind. Über ein übliches Anschlußteil 36, dessen Einzelheiten nicht dargestellt sind, sind der gemeinsame Massekontakt 34 mit dem Masse-Anschluß einer Hochspannungs-Versorgungseinrichtung zur Ansteuerung der Piezoelemente und die einzelnen Steuerkontakte 35 über eine Demultiplexschaltung mit einem Phase- oder SignalAnschluß der Hochspannungs-Versorgungseinrichtung verbunden.

Das Bezugszeichen 37 weist auf eine Halterungseinrichtung hin, mit der mehrere Mikropipettenreihen miteinander verbunden werden, um so eine Mikropipettenmatrix zu bilden. Dies wird dadurch erleichtert, daß die Reihenanordnung einen flachen Aufbau ermöglicht, so daß die Mikropipetten auch in Spaltenrichtung mit einem genügend geringen Abstand angeordnet werden können.

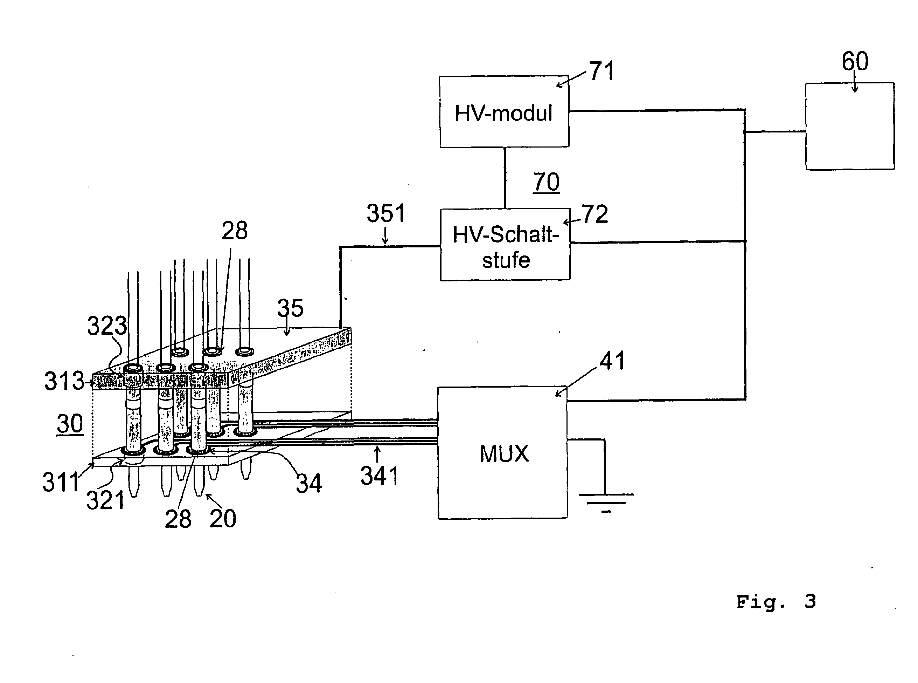

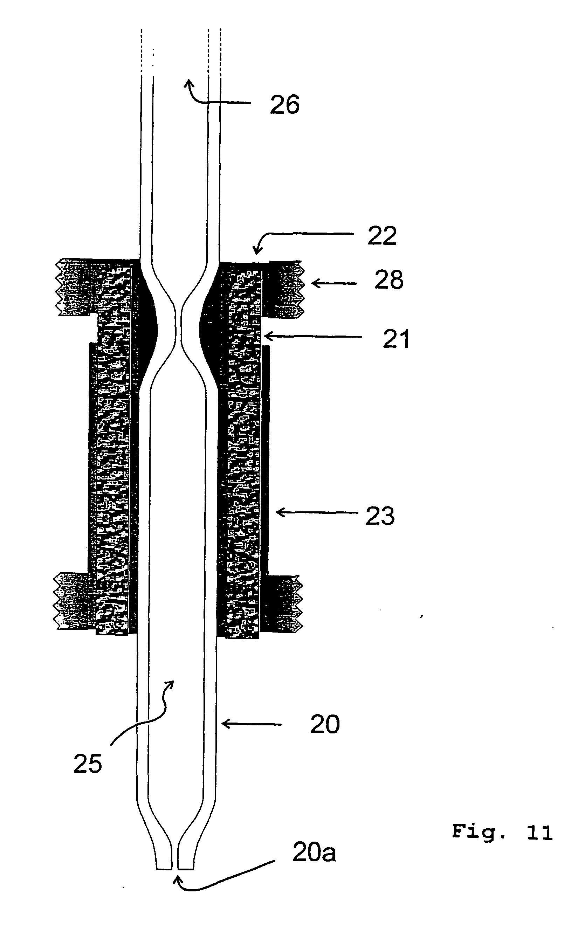

Eine zweite Ausführungsform eines Mehrkanal-Dispensierkopfes zum Einsatz in einem erfindungsgemäßen Verfahren ist in Fig. 3 dargestellt. Fig. 3 illustriert die Gestaltung einer Mikropipettenmatrix (Ausschnitt) und deren elektrische Ansteuerung. Bei der zweiten Ausführungsform sind die Mikropipetten matrixartig zweidimensional in mehreren parallelen Mikropipettenreihen und -spalten an einem gemeinsamen Träger 30 angeordnet. Beispielhaft sind nur drei Spalten und zwei Reihen dargestellt. Anwendungsabhängig sind jedoch wesentlich mehr Mikropipetten matrixartig verteilt. Die Geometrie der Anordnung ist anwendungsabhängig und entspricht vorzugsweise der geometrischen Anordnung der Reservoire einer Mikrotiterplatte. Der Träger 30 umfaßt zwei Trägerteilelemente bestehend aus einer Grundplatte 311 und einer Deckplatte 313. Zusätzlich kann zwischen diesen eine Führungsplatte (nicht dargestellt) vorgesehen sein, die vor allem der Stabilisierung des Trägers 30 dient und bei der Ausführungsform gemäß Fig. 3 gezeigt ist. Jedes der Trägerteilelemente ist jeweils entsprechend mit Aufnahmen 321 und 323 versehen, die im zusammengesetzten Zustand der Trägerteilelemente zueinander ausgerichtet und zur Halterung jeweils einer Mikropipette eingerichtet sind. Jede der Aufnahmen 321 bzw. 322 ist mit einem inneren Gewindebereich versehen, der jeweils mit einem Gewindeansatz der Mikropipette (s. Fig. 11) zusammenwirkt. Außerdem bildet jede Aufnahme 321 bzw. 323 einen elektrischen Steueranschluß für die zugehörige Mikropipette. Bei der dargestellten Ausführungsform trägt die Deckplatte 313 einen gemeinsamen Signalkontakt für sämtliche Mikropipetten 20. Der Signalkontakt 35 wird beispielsweise durch eine elektrisch leitende Beschichtung (Metallplatte) der Deckplatte 313 gebildet und steht über eine Anschlußleitung mit der zugehörigen Steuerung in Verbindung. Die Massekontakte 34 sind in der Ebene der Grundplatte 311 mit Abstand vom Signalkontakt 35 angeordnet. Jeweils eine Signalleitung 341 führt von der zugehörigen Steuerung zu einer der Mikropipetten 20.

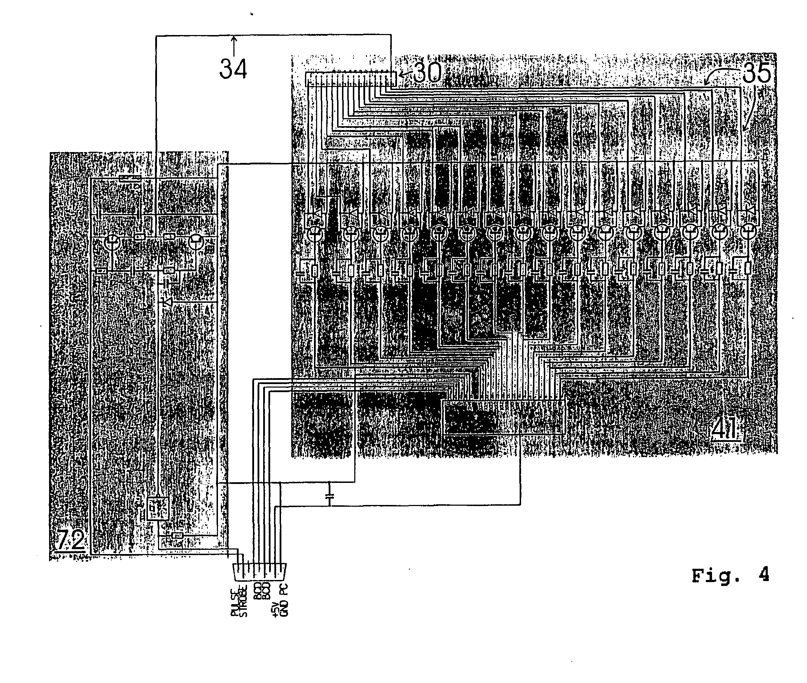

Bei der Ausführungsform gemäß Fig. 3 sind die Signalkontakte sämtlicher Reihen und Spalten der Mikropipetten elektrisch miteinander verbunden, wohingegen die Massekontakte mit einer Demultiplexschaltung 41 einzeln ansteuerbar sind. Die Steuerung des Mehrkanal-Dispensierkopfs gemäß Fig. 3 umfaßt entsprechend den Darstellungen in den Fign. 3 und 4 eine Versorgungseinrichtung 70 mit einer Hochspannungsquelle 71 und einer Schaltstufe 72 sowie die Demultiplexschaltung 41. Sowohl die Versorgungseinrichtung 70 als auch die Demultiplexschaltung 41 sind mit einer rechnergestützten Steuerung (z.B. Steuerrechner 60) verbunden.

Die Mikropipetten 20 sind z.B. Piezopipetten, die jeweils mit einem Spannungspuls von bis zu 250 Volt angesteuert werden.

Die Regelung der Pulsamplitude erfolgt direkt über die Spannungsversorgung der Hochspannungsquelle 71. Hierzu gibt der Steuerrechner 60 (DA-Karte) einen Spannungswert zwischen 0 und 5 Volt aus, der der Hochspannungsquelle 71 als Steuersignal dient. Der Steuerspannungshub von 5 Volt entspricht beispielsweise einem Hochspannungshub von 250 Volt.

Die Schaltstufe 72 enthält Schalttransistoren, die einerseits mit der eingestellten Hochspannung von der Hochspannungsquelle 71 und andererseits über Schmitt-Trigger mit Steuerpulsen von einer Timer-Counter-Karte im Steuerrechner 60 beaufschlagt werden. Die Schalttransistoren liefern entsprechend der gewünschten Ansteuerung der Mikropipetten 20 einen flankensteilen Rechteckpuls an den Signalkontakt 35, der dort allen Mikropipetten simultan zur Verfügung steht. Die elektrische Verbindung mit den Piezoelementen der Mikropipetten erfolgt über die jeweiligen Gewindeansätze der Mikropipetten.

Die Demultiplexschaltung 41 ist beispielsweise eine 16-aus-4-Demultiplexschaltung. Die Auswahl der gewünschten Mikropipetten 20 erfolgt über einen vom Steuerrechner 60 vorgegebenen BCD-Code. Die Demultiplexschaltung 41 entschlüsselt den Code und gibt die jeweilige Pipettenauswahl an eine von vielen Schaltstufen weiter, deren Anzahl der Zahl von Mikropipetten entspricht. Die dadurch aktivierte Schaltstufe bringt den entsprechenden Massekontakt 34 der gewünschten Mikropipette 20 simultan zum Hochspannungspuls der Versorgungseinrichtung 70 auf Massepotential. Dadurch wird die gewünschte Mikropipette 20 einer Potentialdifferenz ausgesetzt. Das Piezoelement wird dementsprechend betätigt und Flüssigkeit dispensiert. Die Düsen, deren Schaltstufen nicht aktiviert sind, bleiben potentialfrei, so daß die jeweiligen Mikropipetten auch nicht betätigt und keine Flüssigkeiten dispensiert werden. Die elektrischen Verbindung zwischen den Schaltstufen der Demultiplexschaltung 41 mit den Piezoelementen der Mikropipetten erfolgt über die jeweiligen Gewindeansätze (s. Fig. 11) und über Leiterbahnen auf der Grundplatte 311. Die Grundplatte 311 ist dementsprechend vorzugsweise eine Platine mit geätzten Kupferbahnen.

Die Ausführungsform gemäß den Fign. 3 und 4 besitzt den Vorteil, daß das System beliebig erweiterbar ist. Eine Erweiterung auf eine vergrößerte Pipettenzahl ist mit minimalem techischem Aufwand möglich, da in jedem Fall nur die eine Versorgungseinrichtung 70 unabhängig von der Zahl der Pipetten erforderlich ist. Die Demultiplexschaltung hingegen kann problemlos mit auf dem Träger 30 angebracht werden, der mit einer Haltevorrichtung (nicht dargestellt) über einem Probensubstrat oder dgl. verfahren werden kann.

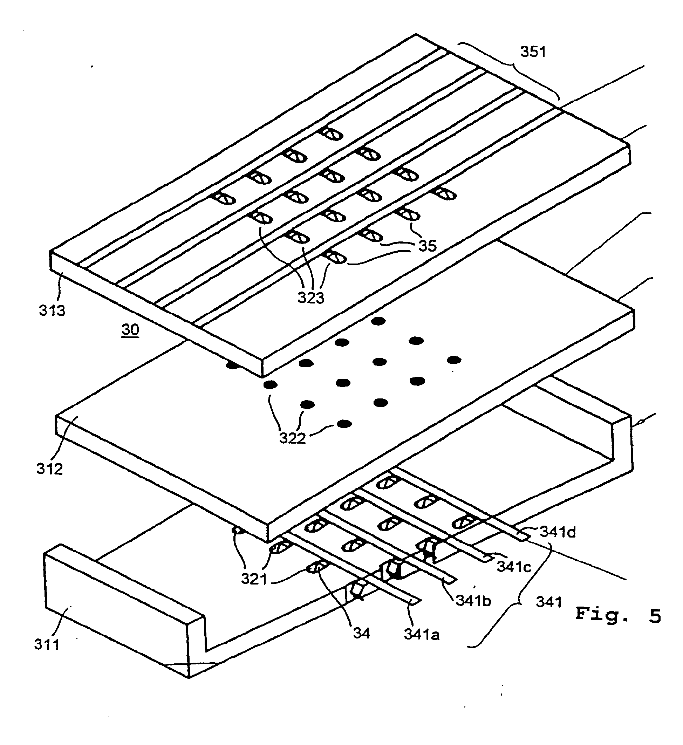

Eine alternative Gestaltung eines Trägers 30 für eine matrixartige, zweidimensionale Mikropipettenanordnung gemäß der dritten Ausführungsform ist in Fig. 5 (auseinandergezogene Darstellung) dargestellt. Der Träger 30 umfaßt hier drei Trägerteilelemente bestehend aus einer Grundplatte 311, einer Führungsplatte 312 und einer Deckplatte 313. Jedes der Trägerteilelemente ist jeweils entsprechend mit Aufnahmen 321, 322 und 323 versehen, die im zusammengesetzten Zustand der Trägerteilelemente zueinander ausgerichtet und zur Halterung jeweils einer Mikropipette eingerichtet sind. In jeder der Aufnahmen 321 bzw. 323 der Grundplatte 311 bzw. 313 befindet sich ein elektrischer Kontakt 34 bzw. 35. Die Kontakte 34 (beispielsweise: Massekontakte 34) sind somit in der Ebene der Grundplatte 311 mit Abstand von den Kontakten 35 (hier: Signalkontakte) in der Ebene der Deckplatte 313 angeordnet. Die Massekontakte 34 sind durch einen ersten Kontaktkamm 341 reihenweise miteinander verbunden. Hierzu sind Kontaktstege 341a, 341b, ... vorgesehen, die sich entlang der Reihen erstrecken und jeweils mit jedem der in der entsprechenden Reihe befindlichen Kontakte 34 verbunden sind. Für die zweite Kon-Kontaktgruppe 35 ist entsprechend ein zweiter Kontaktkamm 351 bestehend aus Kontaktstegen 351a, 351b, ... vorgesehen, der die Kontakte spaltenweise miteinander verbindet. Spaltenweise bedeutet hier, daß die Kontakte 35 in linearen Spalten jeweils untereinander verbunden werden, die senkrecht oder schräg zur den linearen Reihen verlaufen, in denen die Kontakte 34 miteinander verbunden sind. Die Kontaktk mme 341, 351 sind mit Demultiplex-Schaltungen (nicht dargestellt) verbunden, deren Funktion unten erläutert wird.

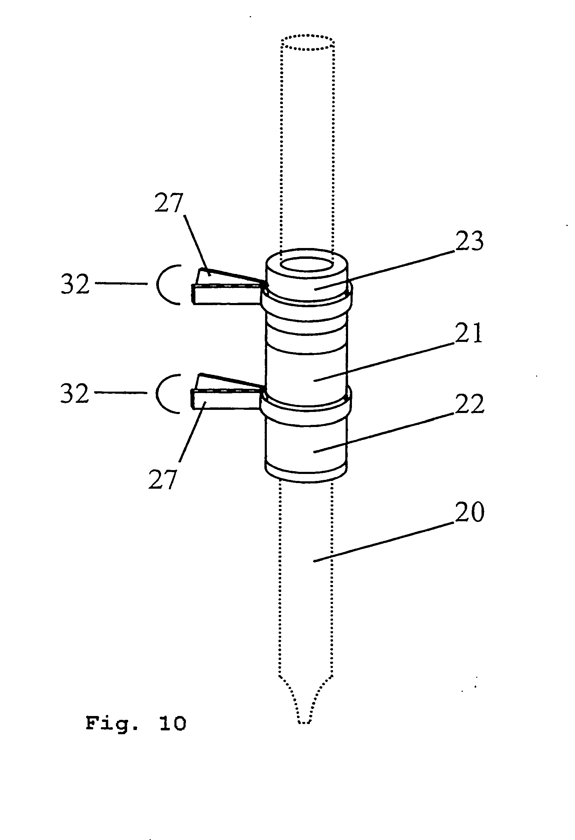

Bei der Ausführungsform gemäß Fig. 5 übernehmen die Kontakte 34, 35 wiederum die Funktion von Befestigungseinrichtungen. Die Kontakte sind jeweils in den Aufnahmen federnd so angeordnet, daß der Querschnitt der Aufnahme verringert wird und ein in der Aufnahme befindliches Piezoelement einer mechanischen Spannung ausgesetzt ist. Die Dicke der Führungsplatte 312 wird entsprechend der konkreten Piezoelement-Bauform so gewählt, daß die Kontakte 34 bzw. 35 jeweils mit den Masse- und Signalanschlüssen der Piezoelemente Kontakt erhalten, wie diese in Fig. 10 gezeigt sind.

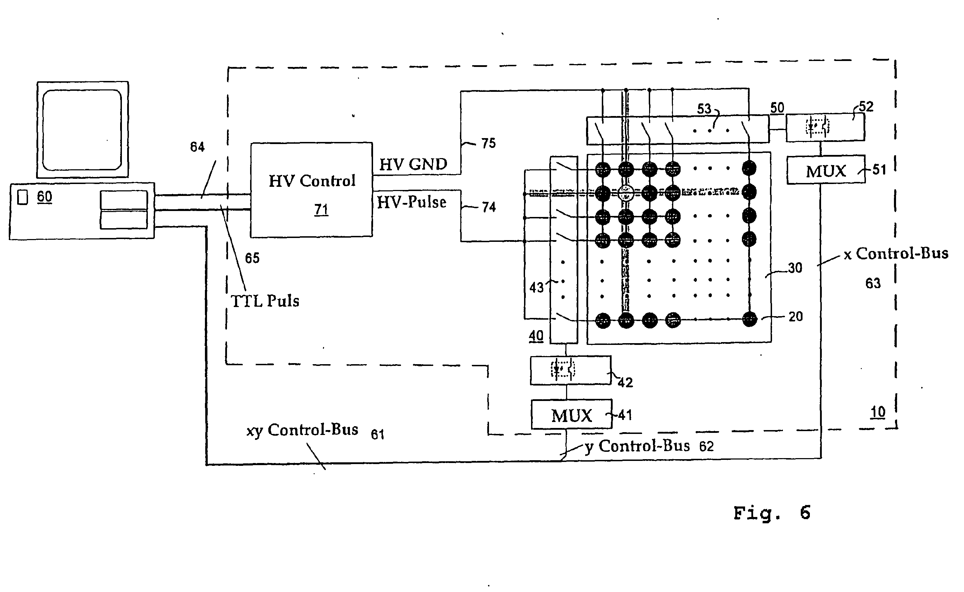

Der oben beschriebene Aufbau des erfindungsgemäßen Mehrkanal-Dispensierkopfes gemäß den Fign. 2 oder 5 erlaubt eine vereinfachte elektronische Steuerung durch Einsatz der Demultiplex-Technik. Um auch die Handhabung des Dispensierkopfs durch Reduzierung der Zahl der elektrischen Steuerleitungen von ortsfesten Steuer- und Versorgungseinrichtungen zu vereinfachen, sind je nach Ausführungsform eine erste Demultiplexschaltung 40 und/oder eine zweite Demultiplexschaltung 50 mit am Dispensierkopf 10 angebracht. Die Demultiplexschaltung 40 ist zur Verteilung von Phasen- oder Steuerimpulsen oder - signalen auf die Piezoelementsteueranschlüsse von einzelnen oder spaltenförmig angeordneten Mikropipetten vorgesehen. Die zweite Demultiplexschaltung 50 ist dementsprechend zur Verteilung von Massepotentialen an die Piezoelement-Masseanschlüsse von reihenweise angeordneten Mikropipetten vorgesehen. Fig. 6 zeigt schematisch ein Blockschaltbild der ortsfesten Steuereinrichtung 60 (beispielsweise ein Computer), der ortsfesten oder mit dem Träger beweglichen Versorgungseinrichtung 70 und des in Bezug auf diese mit einer x-y-z-Stelleinrichtung (nicht dargestellt) beweglichen Dispensierkopfs 10 (gestrichelt umrahmt). Die Darstellung macht einen wichtigen Vorteil der Erfindung deutlich, daß nämlich neben den zwei Leitungen 74, 75 zur Piezoelementansteuerung lediglich zwei weitere Leitungen 62. 63 zur Ansteuerung der Demultiplexschaltungen 40, 50 zwischen dem beweglichen Dispensierkopf 10 und den ortsfesten Laborsystemen vorgesehen sind.

Die Steuereinrichtung 60 dient der automatischen Steuerung des gesamten Mikroplazierungssystems, insbesondere der Dispensierkopfpositionierung und der zeitlichen Mikrotropfenabgabe. Hierzu wird beispielsweise ein Computer mit einer zusätzlichen Timer-Counter-Karte, einem Digital-Analog-Wandler (z.B. National Instruments PC-A-02DC) und mehreren Digital-Ausgängen für die Steuerbus-Leitungen (z.B. National Instruments PC-DI0-96) versehen. Die Timer-Counter-Karte (z.B. PCL mit AM 9513-Baustein) wird zur Erzeugung der je nach Anwendungsfall erforderlichen Piezoimpulslänge (TTL-Impulse zur Hochspannungssteuerung) und der Tropfenfrequenz programmiert. Über den Digital-Analog-Wandler in der Steuereinrichtung 60 kann die Ausgangsspannung der Hochspannungsquelle 71 der Versorgungseinrichtung 70 variiert werden. Diese Variationsmöglichkeit ist vorteilhaft, um die Parameter der Versorungseinrichtung 70 an die Kenngrößen der Mikropipetten des jeweils verwendeten Dispensierkopfes und gegebenfalls an die zu dispensierenden Lösungen anzupassen. Die jeweiligen Kenngrößen (Pulspannung, Pulslänge, Tropfenfrequenz usw.) werden von der Steuereinrichtung 60 verwaltet und in Datenbanken gespeichert.

Die Steuereinrichtung 60 ist über einen x-y-Steuerbus 61 mit den Demultiplexschaltungen 40 und 50 verbunden. Außerdem besteht eine Verbindung mit der Versorgungseinrichtung 70 über die Spannungseinstelleitung 64 und die Impulsleitung 65 zur Pulsbreiten- und Frequenz-Steuerung der Versorgungseinrichtung 70.

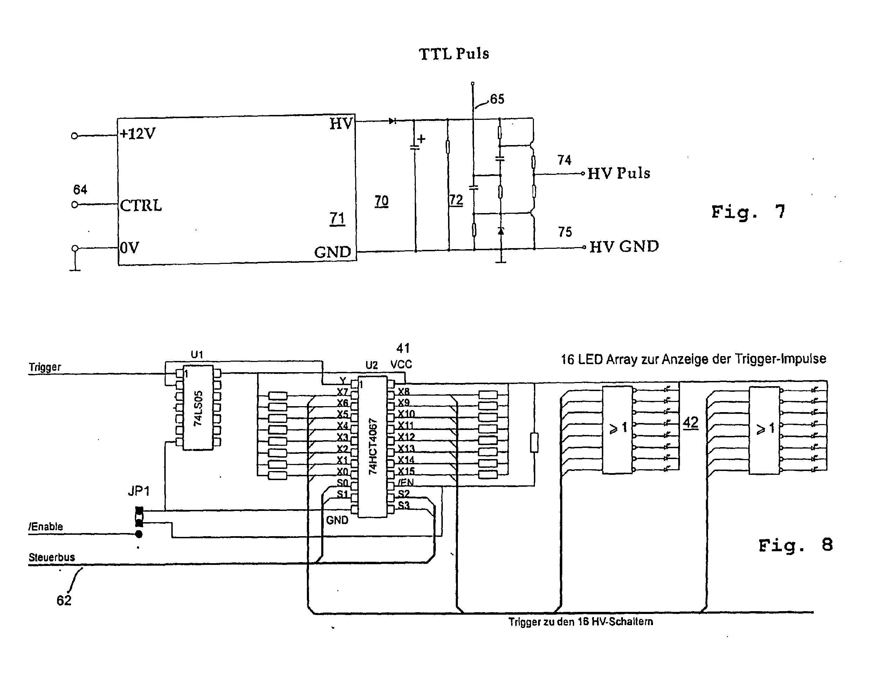

Fig. 7 zeigt Einzelheiten der Versorgungseinrichtung 70, die aus einer Hochspannungsquelle 71 und einer Pulsformungsschaltung 72 besteht. Die Leitungen 64 bzw. 65 von der Steuereinrichtung 60 sind jeweils entsprechend mit den Schaltungen 71 bzw. 72 verbunden. Von der Versorgungseinrichtung 70 führt dann eine Steuerleitung 74 und eine Masseleitung 75 zum Dispensierkopf 10. Über die Steuerleitung 74 wird ein Hochspannungspuls als Steuersignal für die Piezoelemente der Mikropipetten übertragen. Die Hochspannungs-Steuereinheit 71 besteht aus einem kommerziell erhältlichen Linearspannungsverstärker. Die Pulsformungsschaltung 72 ist eine schnell schaltende, flankenpräzise Hochspannungsschaltstufe, die vom TTL-Puls der Steuereinrichtung 60 gesteuert wird.

Einzelheiten der Demultiplex-Schaltung 40 und deren Zusammenwirken mit der Steuereinrichtung 60 und der Versorgungseinrichtung 70 werden im folgenden unter Bezug auf das erste Ausführungsbeispiel gemäß Fig. 2 mit 16 Mikropipetten erläutert. Bei dem ersten Ausführungsbeispiel ist eine Gruppe von Mikropipetten reihenförmig angeordnet, wobei alle Massenkontakte 34 der Mikropipetten elektrisch miteinander verbunden sind. Eine Demultiplexschaltung 50 gemäß Fig. 6 ist in diesem Fall somit nicht vorgesehen. Die im folgenden unter Bezug auf die Figuren 7 und 8 erläuterten Einzelheiten können jedoch in analoger Weise auf die zweite und dritte Ausführungsform mit einer matrixförmigen Mikropipettenanordnung gemäß dem Fign. 3 oder 5 angewendet werden. Die Demultiplexschaltung 50 besitzt dann grundsätzlich denselben Aufbau und dieselben Funktionen wie die Demultiplexschaltung 40, dies jedoch in Bezug auf die separate Ansteuerung der Massekontakte miteinander verbundener Reihen.

Die Demultiplexschaltung 40 (s. Fig. 6) umfaßt einen Demultiplexer 41, eine Anzeigeeinrichtung 42 und eine Schalteranordnung 43. Der Demultiplexer 41 und die Anzeigeeinrichtung 42 sind in Fig. 8 gezeigt. Über den y-Steuerbus 62, der vom x-y-Steuerbus 61 abzweigt, erhält der Demultiplexer 41 ein Selektionssignal, das festlegt, welcher der Signalkontakte 35 des Dispensierkopfs 10 mit dem Hochspannungspuls von der Versorgungseinrichtung 70 beaufschlagt werden soll. Der Demultiplexer 41 ist beispielsweise ein digitaler Demultiplexer vom Typ SN74LS4067. Daraufhin gibt der Demultiplexer 41 über eine der 16 Demultiplexerausgangsleitungen 64 ein Triggersignal aus, das an die Anzeigeeinrichtung 42 und die Schalteranordnung 43 angelegt wird. Die Anzeigeeinrichtung 42 ist lediglich ein Hilfsmittel zur Vereinfachung der Erkennbarkeit, welche Mikropipette des Dispensierkopfs gerade aktuell angesteuert wird. Zur Realisierung der Erfindung ist es nicht zwingend erforderlich, die Anzeigeeinrichtung 42 vorzusehen.

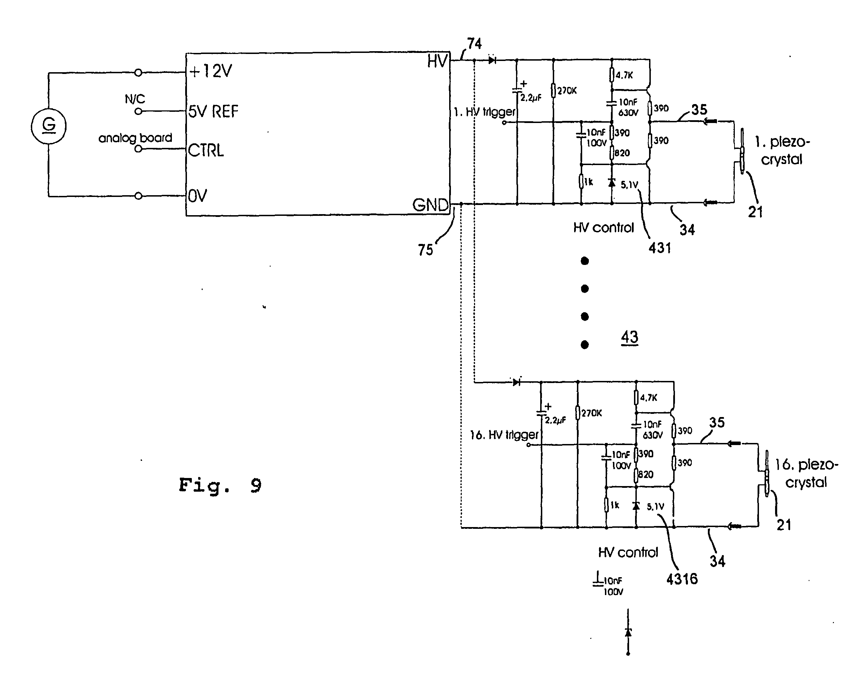

Die Schalteranordnung 43, deren Einzelheiten in Fig. 9 gezeigt sind, wirkt wie eine Relaisgruppe bestehend aus einer Zahl der in der Reihe angeordneten Mikropipetten (z.B. 16) entsprechenden Schalteinheiten 431, ... 4316. Jede der Schalteinheiten enthält als Schaltmittel eine Transistorschaltung, die bei Anlegen eines Triggersignals von einer der sechzehn Demultiplexerausgangsleitungen 64 anspricht und den über die Signalleitung 74 gelieferte Hochspannungspuls an den Signalkontakt 35 des jeweils selektierten Piezoelements 21 weiterschaltet.

Durch das vom Demultiplexer 41 gelieferte Triggersignal wird somit entschieden, welche Mikropipette (bzw. welches Piezoelement) mit dem Hochspannungspuls beaufschlagt wird. Obwohl bei der ersten Ausführungsform sämtliche Piezoelemente mit dem Massepotential fest verbunden sind, wird nur eine Mikropipette elektrisch versorgt und somit zur Mikrotropfenabgabe veranlaßt. Bei der zweiten Ausführungsform enthält die zweite Demultiplexerschaltung 50 entsprechend einen Demultiplexer 51, eine Anzeigeeinrichtung 52 und eine Schalteranordnung 53. Über den x-Steuerbus 63 wird ein Selektionssignal an den Demultiplexer 51 geliefert, wodurch ausgew hlt wird, welche der in Bezug auf die Massekontakte verbundenen Mikropipettenreihen mit der Masseleitung 75 von der Steuereinrichtung 70 verbunden werden soll. Der Demultiplexer 51 liefert wiederum ein entsprechendes Triggersignal, auf das eine der Schalteinheiten der Schalteranordnung 53 das Massepotential auf die entsprechende Mikropipettenreihe durchschaltet. Durch das Zusammenwirken der Demultiplexschaltungen 40 und 50 wird genau eine Mikropipette elektrisch versorgt, die der Reihe und Spalte entspricht, die aktuell mit dem Hochspannungspuls bzw. dem Massepotential beaufschlagt werden. Beim in Fig. 5 dargestellten Beispiel ist dies die Mikropipette in der zweiten Spalte und zweiten Reihe.

Die Zahl der Schaltereinheiten 431, ..., 531, ... in jeder Schalteranordnung 43, 53 wird an die jeweilige Reihen- und Spaltenzahl des Dispensierkopfes 10 angepaßt. So können beispielsweise bei einem Dispensierkopf mit 96 Mikropipetten für eine Mikrotiterplatte mit 96 Substanzreservoirs (Reservoirabstand rd. 9 mm) in der Schalteranordnung 43 acht Schalteinheiten und in der Schalteranordnung 53 zwölf Schalteinheiten vorgesehen sein. Die Schalteinheiten werden vorzugsweise von den Demultiplexern optoisoliert, um das Übersprechen elektrischer Steuersignale zu vermeiden und um eine Verstärkung der Demultiplexersignale zu erzielen. Hierzu sind für jede Schaltereinheit ein Optokoppler vorgesehen.

Eine modifizierte Mikropipette zum Einsatz in einem erfindungsgemäßen Verfahren ist mit Befestigungseinrichtungen versehen, die simultan dem elektrischen und mechanischen Kontakt mit dem Träger dienen. Zwei Ausführungsformen von Befestigungseinrichtungen werden im folgenden unter Bezug auf die Fign. 10 und 11 beschrieben.

Fig. 10 zeigt Einzelheiten eines kommerziell verfügbaren Piezoelements 21 mit Steueranschlüssen 22, 23. Bei Anlegen eines Steuersignals (Hochspannung im Bereich von rd. 30 V bis 200 V) erfolgt eine Verformung des Piezoelements derart, daß sich das mit dem Inneren der Mikropipette befindliche Volumen verringert, so daß von der Mikropipettenspitze ein Mikrotropfen abgegeben wird. Bei der Ausführungsform gemäß Fig. 2 ist jeder Steueranschluß über eine Lötöse 27, die in die jeweilige Aufnahme am Träger ragt, mit den jeweiligen Kontakten im Träger verbunden. Bei der Ausführungsform gemäß Fig. 5 kann auf die Lötöse verzichtet werden, da die Kontakte 34, 35 in den Ausnehmungen 321 bzw. 323 den direkten Kontakt mit den Steueranschlüssen 22, 23 herstellen.

Eine alternative Pipettengestaltung ist in Fig. 11 gezeigt. Die Mikropipette 20 besteht aus einer Bohrsilikatglaskapillare mit einem Außendurchmesser von 1 mm und einer Wandstärke von 41 µm. Das Piezoelement 21 ist ein Piezokeramikrohr mit zwei Steueranschlüssen 22, 23, die jeweils eine innere Elektrode und eine äußere Elektrode (Metallisierung auf dem Piezokeramikrohr) umfassen. Die Befestigungseinrichtungen werden durch zwei Gewindehülsen oder Gewindeansätze 28 gebildet, die jeweils an den Enden des Piezokeramikrohrs aufsitzt. Die Steueranschlüsse 22, 23 sind so angeordnet, daß jeweils ein Ende des Piezokeramikrohrs von einem der Steueranschlüsse bedeckt ist. Dementsprechend bestehen die Gewindeansätze 28 aus metallischem Material in elektrischem Kontakt jeweils mit einem der Steueranschlüsse 22 oder 23. Der Außenumfang der Gewindeansätze 28 ist mit einem Gewinde entsprechend dem Innengewinde in den Aufnahmen 321, 322 am Träger 30 (s. Fig. 3) versehen. Anstelle der Gewinde können auch andere Eingriffsmöglichkeiten (z.B. Rastelemente) vorgesehen sein.

Die Gewindeansätze 28 sind mit einem elektrisch leitenden Klebstoff (z.B. "Circuit Works" von Chemtronics Inc., USA) auf die Steueranschlüsse aufgeklebt. Der axiale Abstand der Steueranschlüsse 22, 23 beträgt rd. 1 cm und der Durchmesser des Piezokeramikrohrs beträgt rd. 3 mm. Die Dimensionen der als Dispenser wirkenden Mikropipette können anwendungsabhängig angepaßt sind.

Die Mikropipette 20 enthält eine Verjüngung 29 zwischen dem Trägervolumen 25 hin zur Pipettenspitze 20a und einem Reservoir 26, das mit einer Druckleitung (nicht dargestellt) verbunden ist (s. Fig. 12).

Fig. 12 zeigt ein weiteres Merkmal, mit dem die Handhabung eines Mehrkanal-Dispensierkopfes vereinfacht werden kann. Wie unter Bezug auf Fig. 1 angegeben, ist jede Mikropipette 20 mit einer Druckleitung 26 versehen. Die Druckleitungen 26 aller Mikropipetten sind mit einer Verteilereinrichtung 80 verbunden, die auch am Dispensierkopf 10 angebracht ist. Von der Verteilereinrichtung 80 führt eine Druckversorgungsleitung 81 zu einer ortsfesten Druckeinrichtung (nicht dargestellt) führt. Die Druckeinrichtung ist dazu vorgesehen, Unter- bzw. Überdrucke zur Aufnahme von Trägerflüssigkeiten oder zu Reinigungszwecken oder eine Druckstabilisierung bereitzustellen, die von der Verteilervorrichtung 80 auf die Druckleitungen 26 (z.B. Gasdruckleitungen) übertragen werden.

Die Verteilereinrichtung 80 kann eine Mehrventilanordnung oder eine Verzweigungsanordnung sein. Bei der Mehrventilanordnung ist eine Ventilanzahl entsprechend der Zahl von Mikropipetten am Dispensierkopf vorgesehen. Die Mehrventilanordnung erlaubt die Druckansteuerung einzelner Mikropipetten für Beschickungs- oder Reinigungszwecke. Bei der Verzweigungsanordnung mündet die Druckversorgungsleitung 81 ohne Ventile in die Vielzahl von Druckleitungen 26. Beim Einsatz der Verzweigungsanordnung wird die Verfahrensweise zur Beschickung oder Reinigung und zur Substanzaufnahme wie folgt realisiert. In einem ersten Schritt wird der Dispensierkopf zu einem Trägerflüssigkeitsreservoir 91 gefahren, so daß die Mikropipettenspitzen simultan in eine Trägerflüssigkeit eintauchen. Über die Druckversorgungsleitung 81 wird an alle Mikropipetten ein Unterdruck derart angelegt, daß die Trägerflüssigkeit in das Trägervolumen 25 jeder der Mikropipetten 20 eingesogen wird. Die Einführung der Trägerflüssigkeit erfolgt soweit, daß ein Füllstand bei der Höhe H oberhalb der jeweiligen Piezoelemente erreicht wird. Die Trägerflüssigkeit hat die Aufgabe, einen an den Piezoelementen gebildeten Druckpuls auf eine in die Mikropipettenspitze geladene Wirksubstanz im Ladevolumen 24 zur Abgabe von Mikrotropfen zu übertragen. Dadurch werden in vorteilhafter Weise die erforderlichen Wirksubstanzvolumina in dem Submikroliterbereich verringert.

In einem zweiten Schritt wird der Dispensierkopf 10 zu einer Mikrotiterplatte 92 gefahren und derart auf die Mikrotiterreservoire oder -volumina 921, 922, 923 ... abgesenkt, daß die Mikropipettenspitzen in die Wirksubstanzen in den Reservoiren eintauchen. Durch erneutes Anlegen eines Unterdrucks über die Druckversorgungsleitung 81 wird die jeweilige Wirksubstanz in die Mikropipettenspitze in die Ladevolumina 24 gezogen. Durch geeignete Auswahl der Trägerflüssigkeit und der Lösungsmittels der Wirksubstanz wird eine Vermischung von beiden Flüssigkeiten vermieden.

Anschließend wird der Dispensierkopf 10 zum Reaktionssubstrat 93 gefahren, wo der beabsichtigte kombinatorische Reaktionsablauf durch gezieltes Positionieren von Mikrotropfen in den einzelnen Wirksubstanzen an vorbestimmten Orten auf dem Substrat 93 realisiert wird.

Der Vorteil dieser Verfahrensweise besteht darin, daß mit der Verzweigungsanordnung, die einen sehr einfachen Aufbau aufweist, positions- bzw. pipettenspezifisch am Dispensierkopf Wirksubstanzen aufgenommen werden, ohne daß einzelne Ventile betätigt werden müssen.

Der Dispensierkopf wird vorzugsweise bei erfindungsgemäßen biotechnologischen, gentechnischen oder chemisch-technologischen Verfahren eingesetzt. Die beschriebene Matrix mit senkrecht oder schräg zueinander verlaufenden Reihen kann auch durch eine andere zweidimensionale Anordnung ersetzt werden. Sind die Mikropipetten beispielsweise kreisförmig angeordnet, so erfolgt die Ansteuerung nicht über kartesische x-y-Koordinaten, sondern über Polarkoordinaten. Dann realisieren die Demultiplexerschaltungen jeweils eine Radius- und Winkelauswahl.

## Patentansprüche

1. Verfahren zur Abgabe von Mikrotropfen mit einem Mehrkanal-Dispensierkopf (10) mit einer Vielzahl von Mikropipetten (20), die jeweils eine elektrisch betätigbare Auslöseeinrichtung (21) mit einem Masse- und einem Signalanschluss aufweisen, wobei die Mikropipetten (20) als ein- oder zweidimensionale Anordung auf einem gemeinsamen Träger (30) angebracht sind, der für jede Mikropipette (20) eine Aufnahme (32, 321, 323) mit einem Masse- und einem Signalkontakt (34, 35) aufweist, wobei die Masse- und Signalkontakte am Träger in Bezug auf die Längsausdehnung der jeweiligen Mikropipette voneinander beabstandet angeordnet sind, mit den Schritten:
a) simultanes Beschicken der Mikropipetten (20) mit einer Trägerflüssigkeit, wobei die Trägerflüssigkeit in jeder Mikropipette (20) ein Trägervolumen (25) füllt, wobei das Trägervolumen (25) von der Auslöseeinrichtung (21) bis zu einem Ladevolumen (24) an der Mikropipettenspitze reicht und wobei die Trägerflüssigkeit zur Druckübertragung von der Auslöseeinrichtung (21) zum Ladevolumen (24) eingerichtet ist, und anschließend
b) Beschicken der Mikropipetten (20) mit verschiedenen, in Lösungsmittel gelösten Wirksubstanzen, wobei die Wirksubstanzen jeweils die Ladevolumina (24) füllen und Trägerflüssigkeit und Lösungsmittel der Wirksubstanz so gewählt sind, dass eine Vermischung vermieden wird.

2. Verfahren nach Anspruch 1, bei dem zur Beschickung der Ladevolumina (24) der Mehrkanal-Dispensierkopf (10) so über eine matrixartige Anordnung von Wirksubstanzreservoiren (921, 922, 923) gefahren wird, dass die Mikropipettenspitzen simultan in die Wirksubstanzreservoire (921, 922, 923) eintauchen.

3. Verfahren nach einem der vorstehenden Ansprüche, **dadurch gekennzeichnet,**
a) **dass** der Mehrkanal-Dispensierkopf (10) zu einem Trägerflüssigkeitsreservoir (91) gefahren wird, so dass die Spitzen der Mikropipetten (20) simultan in eine Trägerflüssigkeit eintauchen, und
b) **dass** dann das simultane Beschicken der Mikropipetten (20) durch ein Anlegen von Unterdruck an die Mikropipetten (20) durchgeführt wird.

4. Verfahren nach einem der vorstehenden Ansprüche, **dadurch gekennzeichnet, dass** die elektrisch betätigbare Auslösevorrichtung (21) ein Piezoelement ist.

5. Verfahren nach Anspruch 4, **dadurch gekennzeichnet, dass** das simultane Beschicken soweit erfolgt, dass ein Füllstand oberhalb des jeweiligen Piezoelements erreicht wird.

6. Verfahren nach einem der vorstehenden Ansprüche, **dadurch gekennzeichnet, dass** das Beschicken der Mikropipetten (20) mit den in Lösungsmittel gelösten Wirksubstanzen so erfolgt, dass das Ladevolumen eine Wirksubstanzmenge im Submikroliter-Bereich aufnimmt und wesentlich kleiner als das Trägervolumen (25) ist.

## Claims

1. Method for dispensing microdrops with a multichannel dispensing head (10) with a large number of micropipettes (20) each of which having an electrically actuated initiating device (21) with one mass and one signal connection, the micropipettes (20) being mounted as a one- or two-dimensional array on a common carrier (30) which has a holder (32, 321, 323) with one mass and one signal contact (34, 35) for each micropipette (20), the mass and signal contacts being arranged on the carrier in a mutually spaced manner relative to the longitudinal extension of the respective micropipette, with the steps:
a) simultaneous feeding of the micropipettes (20) with a carrier fluid whereby the carrier fluid in each micropipette (20) fills a carrier volume (25) with the carrier volume (25) reaching from the initiating device (21) up to a charge volume (24) at the micropipette tip and with the carrier fluid being set up to transmit pressure from the initiating device (21) to the charge volume (24), and subsequently
b) feeding of the micropipettes (20) with different active ingredients dissolved in solvent, with the active ingredients each filling the charge volumes (24) and carrier fluid and solvent of the active ingredient being selected such that mixing is avoided.

2. Method according to Claim 1 in which to feed the charge volumes (24) the multichannel dispensing head (10) is moved over a matrix-like array of active ingredient reservoirs (921, 922, 923) such that the micropipette tips are simultaneously immersed into the active ingredient reservoirs (921, 922, 923).

3. Method according to one of the above claims **characterised by** the fact
a) that the multichannel dispensing head (10) is moved to a carrier fluid reservoir (91) such that the tips of the micropipettes (20) are simultaneously immersed in a carrier fluid, and
b) that the simultaneous feeding of the micropipettes (20) is effected by applying vacuum to the micropipettes (20).

4. Method according to one of the above claims **characterised by** the fact that the electrically actuated initiating device (21) is a piezoelement.

5. Method according to Claim 4 **characterised by** the fact that the simultaneous feeding is effected until a fill level above the respective piezolement is reached.

6. Method according to one of the above claims **characterised by** the fact that the feeding of the micropipettes (20) with the active ingredients dissolved in solvent is effected such that the charge volume absorbs a quantity of active ingredient in the submicrolitre range and is significantly less than the carrier volume (25).

## Revendications

1. Procédé de distribution de microgouttes au moyen d'une tête de distribution (10) à plusieurs canaux avec une pluralité de micropipettes (20) qui comportent chacune un dispositif de déclenchement (21), apte à être actionné électriquement et pourvu d'une borne de masse et d'une borne de transmission de signaux, lesdites micropipettes (20) étant disposées selon une configuration unidimensionnelle ou bidimensionnelle sur un support (30) commun, qui comporte pour chaque micropipette (20) une admission (32, 321, 323) avec un contact de masse et un contact de transmission de signaux (34, 35), les contacts de masse et les contacts de transmission de signaux étant disposés sur le support à distance les uns des autres par rapport à la dimension longitudinale de chaque micropipette, ledit procédé comportant les étapes :
a) remplissage simultané des micropipettes (20) avec un liquide porteur, ledit liquide porteur comblant dans chaque micropipette (20) un volume support (25), ledit volume support (25) allant depuis le dispositif de déclenchement (21) jusqu'à un volume de charge (24) à la pointe de la micropipette, et ledit liquide porteur étant conçu pour transmettre une pression depuis le dispositif de déclenchement (21) vers le volume de charge (24), et ensuite
b) remplissage des micropipettes (20) avec des substances actives différentes, mises en solution dans le solvant, lesdites substances actives comblant respectivement les volumes de charge (24), et le liquide porteur et le solvant de la substance active étant choisis de manière à empêcher un mélange.

2. Procédé selon la revendication 1, dans lequel, pour remplir les volumes de charge (24) de la tête de distribution (10) à plusieurs canaux, on passe au-dessus d'un agencement en matrice de réservoirs de substance active (921, 922, 923), de telle sorte que les pointes des micropipettes plongent simultanément dans les réservoirs de substance active (921, 922, 923).

3. Procédé selon l'une quelconque des revendications précédentes, **caractérisé**
a) **en ce que** la tête de distribution (10) à plusieurs canaux est déplacée vers un réservoir de liquide porteur (91), de telle sorte que les pointes des micropipettes (20) plongent simultanément dans un liquide porteur, et
b) **en ce que** le remplissage simultané des micropipettes (20) est mis en oeuvre par l'application d'une dépression sur les micropipettes (20).

4. Procédé selon l'une quelconque des revendications précédentes, **caractérisé en ce que** le dispositif de déclenchement (21) apte à être actionné électriquement est un élément piézoélectrique.

5. Procédé selon la revendication 4, **caractérisé en ce que** le remplissage simultané est effectué jusqu'à ce que le remplissage atteigne le niveau au-dessus de l'élément piézoélectrique respectif.

6. Procédé selon l'une quelconque des revendications précédentes, **caractérisé en ce que** le remplissage des micropipettes (20) avec les substances actives mises en solution dans le solvant est effectué de telle sorte que le volume de charge accepte une quantité de substance active de l'ordre du submicrolitre et est nettement inférieur au volume support (25).
